# EUROPEAN PATENT APPLICATION

(11) **EP 1 231 106 A2**
(43) Date of publication of application: **14.08.2002**
(21) Application number: 02002871.8
(22) Date of filing: 08.02.2002
(51) Int. Cl.: B60P 3/08

(54) **Solid-freight semitrailer with a fast freight loading and unloading system**

(30) Priority: 09.02.2001 IT TO010111
(71) Applicant: Ego Engineering S.r.l., 10123 Torino (IT)
(72) Inventor: Valgoglio, Mauro, 10127 Torino (IT); Gentile, Giorgio, 10122 Torino (IT)
(74) Representative: Cerbaro, Elena

(57) **Abstract**

The semitrailer (1) has a supporting frame (2) defined by longitudinal members (6, 7, 13) connected by cross members (15, 16); and a number of parallel conveyor belts (18). Each conveyor belt (18) is moved longitudinally by pairs of pulleys (19, 21) to define a flat portion of the path of the conveyor belt (18) for supporting freight during transportation; the pulleys (19, 21) and the conveyor belt (18) are arranged so that the flat portion of the path is on a level with the normal loading surface (P) of the semitrailer (1); the conveyor belt (18) has a supporting structure defined by a pair of further longitudinal members (23) connected by respective cross members (24) and fixed to two of the longitudinal members (6, 7, 13) of the frame (2); the pairs of pulleys (19, 21) are carried by shafts (36, 54) fitted to the pair of further longitudinal members (23) of the conveyor belt (18); and the conveyor belts (18) are located alongside fixed strips (77, 84) carried by the longitudinal members (6, 7, 13) of the frame (2) and on a level with the loading surface (P) of the semitrailer (1).

## Description

The present invention relates to a solid-freight semitrailer with a fast freight loading and unloading system, e.g. miscellaneous freight in the form of items of various sizes, possibly arranged on pallets or in containers.

The problem of loading and unloading freight on and off transport vehicles in general, and semitrailers in particular, is now vastly important, both on account of the increasing cost of labour and to ensure economic use of the vehicle. Various types of powered freight loading and unloading systems are known, one of which comprises a loading and unloading station conveyor belt, which is moved up to the vehicle - which may be a motor vehicle, a van or a semitrailer - to transfer freight from the yard to the vehicle loading bed.

This system has various drawbacks. In particular, it can only be used at stations equipped with such a system, and freight must be stowed by hand inside the vehicle and unloaded by hand off the vehicle loading bed on to the conveyor belt.

Semitrailers equipped with loading and unloading systems have been proposed, and which feature permanently installed conveyor belts which can be used at any loading and unloading station. The conveyor belts of known semitrailers of this sort are normally manufactured separately from the semitrailer, and have their own supporting structure, which is fitted to a standard semitrailer loading bed, i.e. as an add-on to a semitrailer designed for any sort of loading and unloading system.

While indeed providing for fast loading and unloading, such known systems have the drawback of reducing the load capacity of the semitrailer by a considerable percentage, which may amount to several cubic meters of valuable loading space. Moreover, the loading and unloading system supporting structure separate from the semitrailer frame is extremely expensive. And, finally, installation of the loading and unloading system involves alterations to the loading bed and frame of the semitrailer, both to fasten down the conveyor belt structure and to insert the loading and unloading system control members, so that additional approval of the semitrailer may be required.

It is an object of the present invention to provide a freight-carrying vehicle equipped with a freight loading and unloading system, which provides for fast loading and unloading, does not reduce the load capacity of the semitrailer, is cheaper to make and operate, and eliminates the aforementioned drawbacks typically associated with semitrailers equipped with known loading and unloading systems.

According to the present invention, there is provided a solid-freight semitrailer equipped with a fast freight loading and unloading system, and comprising a supporting frame defined by longitudinal members connected by cross members, and at least one conveyor belt moved longitudinally by pairs of pulleys, so as to define a flat portion of the path of said conveyor belt for supporting freight during transportation; characterized in that said pulleys and said conveyor belt are so arranged that said flat portion of the path is on a level with the normal loading surface of the semitrailer.

The conveyor belt comprises a supporting structure integrated with the frame, and which comprises a further two longitudinal members connected by respective cross members; said further two longitudinal members being fixed to two of the longitudinal members of the frame, whereas the pairs of pulleys are carried by shafts fitted to the two longitudinal members of the supporting structure of the conveyor belt.

A preferred, non-limiting embodiment of the invention will be described by way of example with reference to the accompanying drawings, in which:
Figure 1 shows a partial longitudinal section of a semitrailer equipped with a loading and unloading system in accordance with the invention;
Figure 2 shows a plan view of the frame of the semitrailer and the supporting structure of the loading and unloading system in Figure 1;
Figure 3 shows a larger-scale cross section of the semitrailer frame;
Figure 4 shows a partial, larger-scale section along line IV-IV in Figure 2;
Figure 5 shows a larger-scale section along line V-V in Figure 4;
Figure 6 shows a partial section along line VI-VI in Figure 2;
Figure 7 shows a larger-scale side view of a detail in Figure 1;
Figure 8 shows a partial section along line VIII-VIII in Figure 7;
Figure 9 shows a side view of a further detail in Figure 1 to the same scale as in Figure 7;
Figure 10 shows a partial section along line X-X in Figure 9;
Figure 11 shows a partial section along line XI-XI in Figure 9;
Figure 12 shows a larger-scale detail of Figure 11;
Figure 13 shows a section along line XIII-XIII in Figure 11;
Figure 14 shows a plan view of a portion of the conveyor belt chain;
Figure 15 shows a side view of Figure 14.

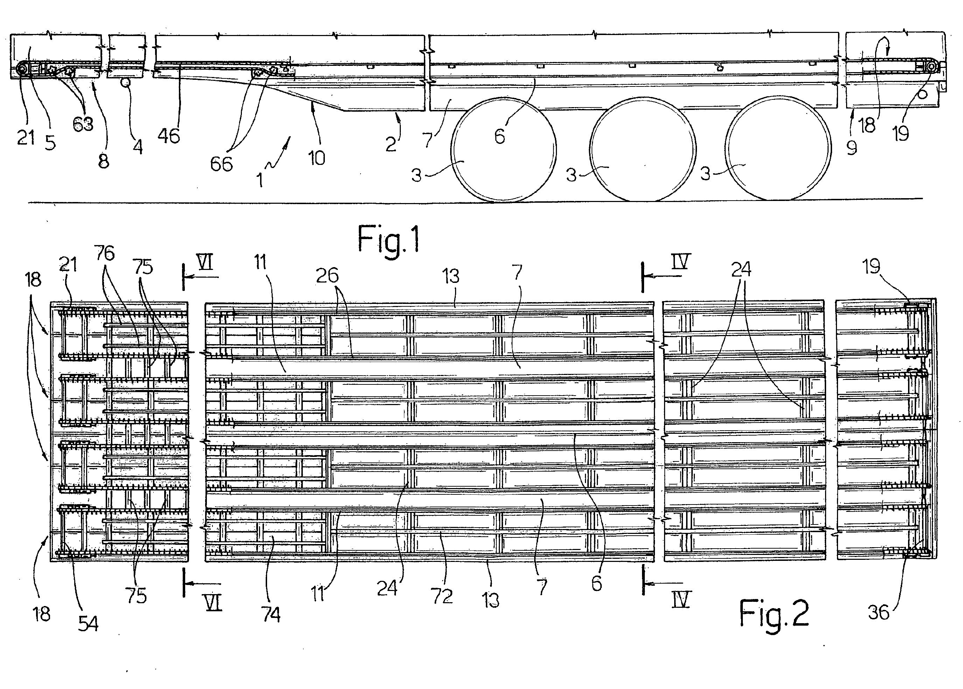

With reference to Figures 1 and 2, number 1 indicates as a whole a freight-carrying semitrailer comprising a supporting frame 2 defined by longitudinal members and cross members. Frame 2 is connected in known manner to the usual axles of wheels 3, and is fitted at the front with the usual fifth wheel 4 of semitrailer 1, which may also be fitted with the usual body indicated as a whole by 5 and shown only partly in Figure 1.

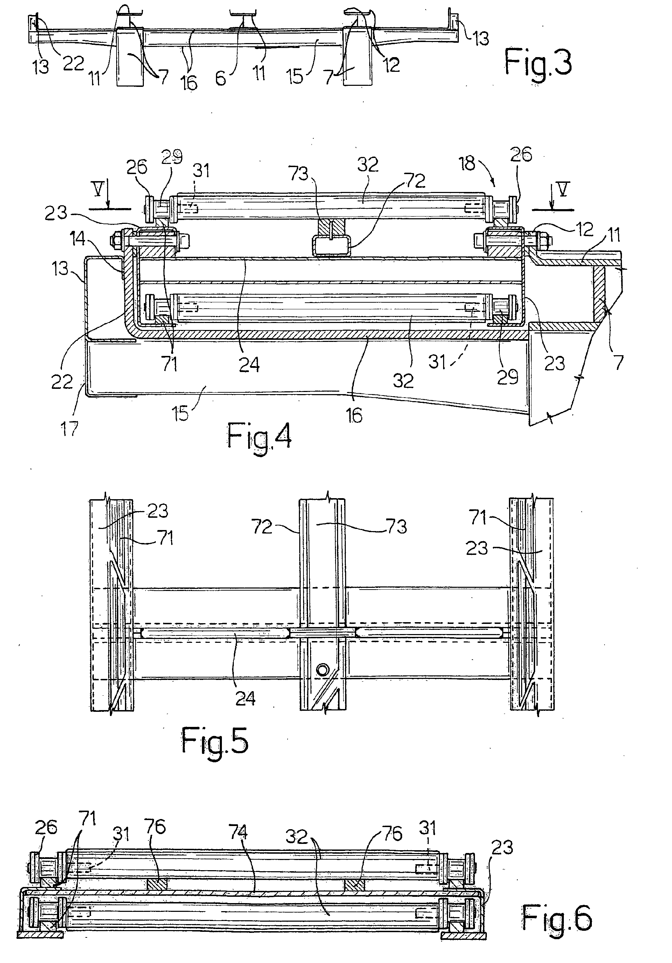

Frame 2 comprises a central longitudinal member 6 (see also Figure 3) with an H section of constant height; and two mid longitudinal members 7 with an H section varying in height. More specifically, each longitudinal member 7 comprises a low front portion 8; a high rear portion 9; and an intermediate portion 10 increasing in height from portion 8 to portion 9. Longitudinal members 6 and 7 each have a U-section top bar 11 forming two upward-facing wings 12.

Frame 2 also comprises two constant-C-section lateral longitudinal members 13, each having a vertical wing 14 (Figure 4). Longitudinal members 6, 7 and 13 are connected to one another by a number of T-section cross members, each comprising a vertical core 15 and a horizontal plate 16. Plate 16 terminates laterally with a portion 22 bent upwards and connected to wing 14 of the relevant longitudinal member 13. Each end of core 15 is inserted in an L-shaped appendix 17 of the corresponding longitudinal member 13; and the lateral walls of body 5 are fixed in known manner to longitudinal members 13.

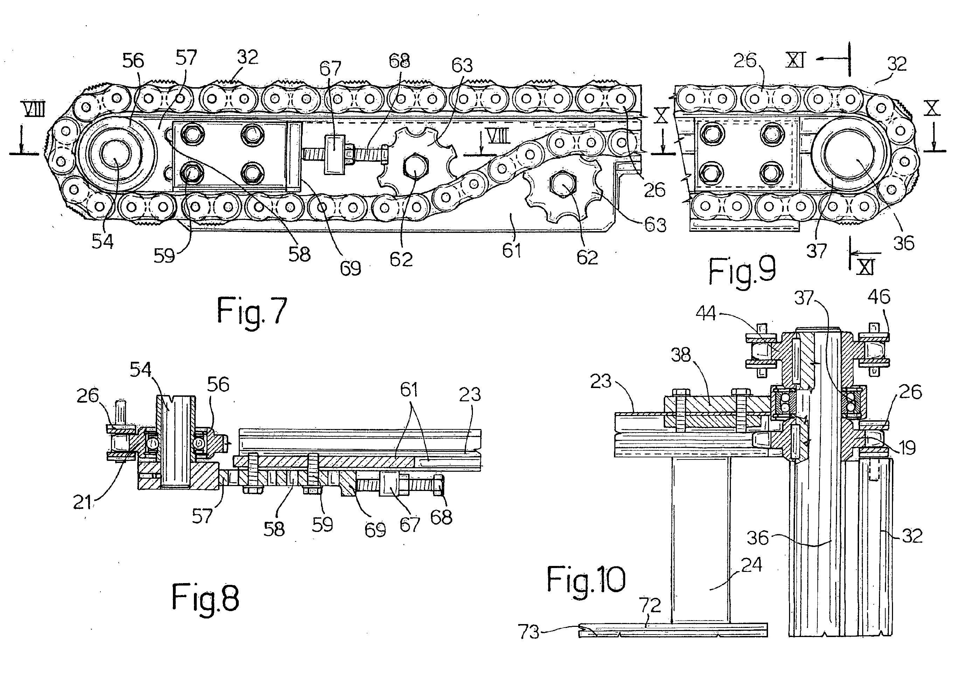

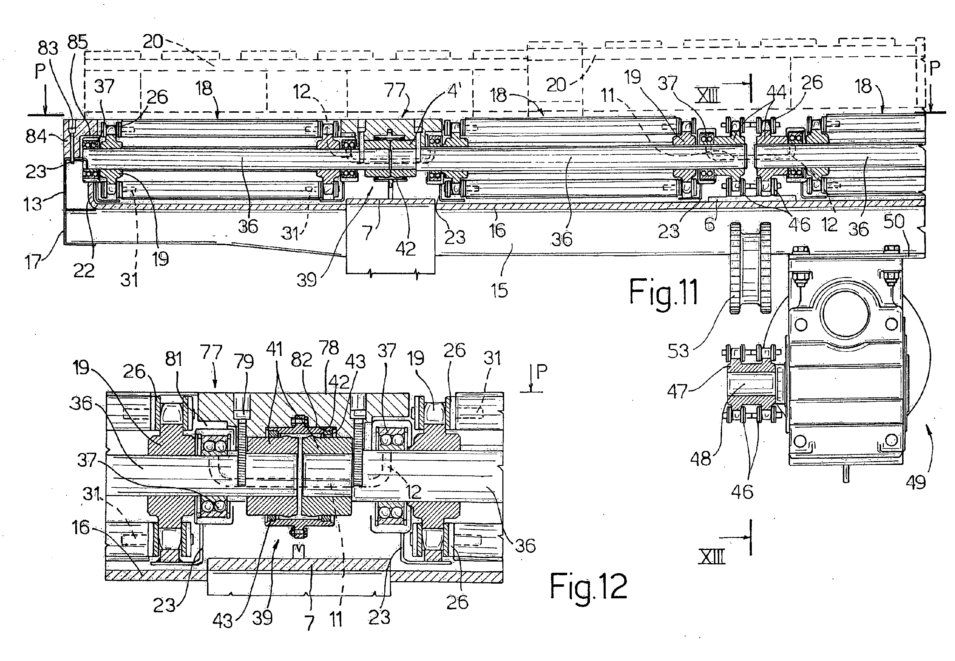

According to the invention, semitrailer 1 is equipped with a fast freight loading and unloading system comprising at least one conveyor belt indicated as a whole by 18 and moved longitudinally by at least two pairs of pulleys : two rear pulleys 19, and two front pulleys 21 (see also Figures 8 and 10). Pulleys 19, 21 are arranged to define a flat top portion of the path of conveyor belt 18; which flat portion extends substantially the whole length of body 5 and provides for supporting the freight during transportation. The dash lines in Figure 11 indicate freight-supporting pallets 20; and conveyor belt 18 is so positioned that the flat top portion of its path is on a level with the normal loading surface P of semitrailer 1.

More specifically, the loading and unloading system comprises four identical parallel conveyor belts 18 (Figures 2 and 11), each housed in the gap between two longitudinal members 6, 7 and 13, and each comprising a fixed supporting structure defined by two further C-section longitudinal members 23 (Figures 4 and 5). Longitudinal members 23 are symmetrical ad welded to a number of rectangular-section cross members 24.

One longitudinal member 23 of each of the two lateral conveyor belts 18 is bolted to portion 22 of plate 16 of frame 2, while the other longitudinal member 23 is fixed to one wing 12 of bar 11 of the corresponding mid longitudinal member 7. The two longitudinal members 23 of each of the two intermediate belts 18 (Figures 11 and 12) are bolted respectively to one wing 12 of bar 11 of central longitudinal member 6, and to the other wing 12 of the corresponding mid longitudinal member 7. Therefore, it is clear that the supporting structure 23, 24 of each conveyor belt 18 is integrated with frame 2 of semitrailer 1.

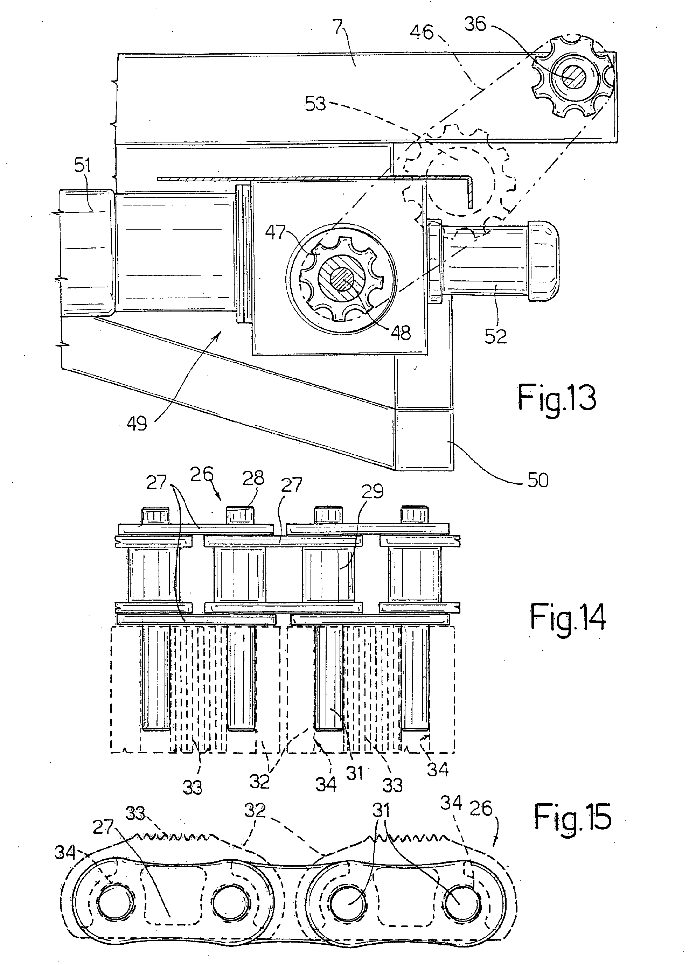

Each conveyor belt 18 comprises two chains 26, each defined by links comprising pairs of plates 27 (Figures 14 and 15) hinged to one another by pins 28 and kept apart by spacer rollers 29. Each pin 28 has an extension 31 extending inwards of conveyor belt 18; and one end of a slat 32 - indicated by the dash lines in Figures 4 and 5 - is hinged to each pair of extensions 31 of alternate links, so that the pairs of plates 27 supporting two adjacent slats 32 have another pair of plates 27 in between. Each slat 32 has a nonslip outer surface 33 on which the freight rests. More specifically, slat 32 may be made of suitable plastic material with a knurled surface 33, and with two parallel holes 34 engaged by extensions 31 of pins 28 of two corresponding links of the two chains 26.

Pulleys 19 and 21 are toothed to engage rollers 29 of chains 26. The two rear pulleys 19 are fitted to a shaft 36 (Figures 9 and 10) which rotates on two rolling bearings 37 carried by two reinforcing plates 38 fixed to the two longitudinal members 23. The shafts 36 of the four conveyor belts 18 are aligned with and rotate integrally with one another. More specifically, the two shafts 36 of the two left conveyor belts 18, and those of the two right conveyor belts 18 are connected integrally by corresponding joints, each indicated as a whole by 39 (see also Figure 12). More specifically, each joint 39 comprises two toothed sleeves 41, which mesh with teeth on a casing 42 rotating in a gap in relative longitudinal member 7 of frame 2. Casing 42 has two seals 43 for sealing in the lubricating grease of joint 39.

Shaft 36 of each of the two central conveyor belts 18 is fitted with a toothed transmission pulley 44 engaged by a corresponding transmission chain 46; and the two chains 46 engage two drive pulleys 47 having a common hub, so that chains 46 connect the two shafts 36 of the two central conveyor belts 18 integrally with each other. It is interesting to note that the distance between the adjacent toothed pulleys 19 of the two central conveyor belts 18 is equal to that between the toothed pulleys 19 connected by each joint 39.

The hub of pulleys 47 is connected to the output shaft 48 of a motor reducer 49 fixed to a support 50 (see also Figure 13) defined by sections fixed to mid longitudinal members 7. The input of motor reducer 49 is defined by a common shaft between an alternating-current motor 51 - equipped with a brake and which can be powered from the electric mains - and a direct-current motor 52, which can be powered by the semitrailer tractor battery, so that the loading and unloading system can be operated anywhere. A double toothed ring 53 of reinforced rubber is inserted between two facing portions of the two transmission chains 46, and is engaged by radial deformation to create a preload. In actual use, double ring 53 tends to expand to keep chains 46 taut.

The two front pulleys 21 rotate on two rolling bearings 56 (Figures 7 and 8) carried by a corresponding shaft 54, which is fixed to two adjusting plates 57, so that the pulleys rotate independently of each other. Each plate 57 has four slots 58 engaged by four rollers carried by screws 59 fixed to another reinforcing plate 61; and each reinforcing plate 61 is fixed to each longitudinal member 6, 7, 13 and has two openings in which two shafts 62 are fixed.

Rotatably mounted on each of the two shafts 62 is a pair of toothed transmission pulleys 63, which are arranged to bring the bottom path of conveyor belt 18 closer to the top path, and so reduce the size of the conveyor in the connecting zone of the tractor at portion 8 (Figure 1) of longitudinal members 7. Another two shafts fitted with transmission pulleys 66 similar to pulleys 63 are provided at portion 10 of longitudinal members 7 to restore the path of chains 26 to the distance defined by pulleys 19.

Each reinforcing plate 61 (Figure 8) has an appendix 67 with a threaded hole engaged by a screw 68 for adjusting the tension of respective chain 26, and the end of screw 68 engages a shoulder 69 on the corresponding adjusting plate 57, so that shafts 54 of the four conveyor belts 18 are substantially aligned, but can be adjusted in position independently.

To guide each chain 26 along both the top and bottom path, each longitudinal member 23 (Figure 4) is fitted in known manner with two bars 71 made of plastic material - e.g. the material known commercially as Polizene (registered trademark) - and on which spacer rollers 29 of plates 27 of chains 26 roll. Moreover, to support each conveyor belt 18 and the relative freight along the top path, a rectangular-section longitudinal member 72, with another bar 73 of said plastic material, is fixed to the middle of cross members 24.

At portion 8 (Figure 1) of longitudinal members 7, longitudinal members 23 (Figure 6) are lower, and are connected to another plate 74, as opposed to cross members 24; bar 11 of longitudinal members 6 and 7 has transverse reinforcing ribs 75 (see also Figure 2) giving it a lacunar appearance; plate 74 has two bars 76 of plastic material for supporting slats 32 along another two lines between bars 71; and, as conveyor belt 18 operates, slats 32 slide along bars 73 and 76 to prevent them deforming under the weight of the freight.

Conveyor belts 18 are separated by fixed strips 77 (Figures 11 and 12), the top surface of which is coplanar with the normal loading surface P and therefore substantially coplanar with the flat top path of belts 18. For the sake of simplicity, Figure 11 only shows strip 77 between the two left belts 18. Since pulleys 19 and 21 of adjacent belts 18 are equidistant, however, a similar strip 77 also separates the two central belts.

More specifically, each strip 77 is defined by contoured panels 78 of said plastic material, which are fixed by screws 79 to bar 11 and have grooves 80 for housing ribs 76, and recesses 81 for housing bearings 37 and 56. The rear panel 78 has another recess 82 for housing joint 39 of shafts 36 of pulleys 19. Another strip 84, possibly comprising a number of segments made of said plastic material, is fixed by means of screws 83 to each of the two longitudinal members 13, is also coplanar with loading surface P, and has recesses 85 for housing corresponding bearings 37 and 56.

Longitudinal members 6, 7 and 13 are connected at the bottom by sheet metal guards not shown in the drawings, and which may be thicker at portion 8 (Figure 1) to reinforce frame 2. Semitrailer 1 may also be provided with a control keyboard having at least a forward, reverse, and stop button. Body 5 may be provided inside with microswitches or freight stop indicators for stopping motor reducer 49 when engaged by an item being loaded. And motor reducer 49 may be provided with an operating torque-sensitive coupling for stopping conveyor belts 18 in the event of jamming for any reason.

The loading and unloading system described above may be used in combination with a fixed loading ramp having one or more conveyor belts, and to which the rear end of semitrailer 1 is drawn up. In which case, loading can be conducted by loading successive rows of pallets on to the ramp and simultaneously operating the ramp conveyor belts and conveyor belts 18. Similarly, semitrailer 1 can be unloaded with no interruptions and in a few minutes by simultaneously operating the ramp conveyor belts and conveyor belts 18 of semitrailer 1. Semitrailer 1 can also, obviously, be loaded and unloaded using freight or pallet lifters for loading and unloading freight on and off the rear end of conveyor belts 18 of semitrailer 1.

As compared with semitrailers equipped with known add-on loading and unloading systems, the advantages of the semitrailer equipped with the loading and unloading system according to the invention will be clear from the foregoing description. In particular, the height and, therefore, the volume of the loading compartment of semitrailer 1 is substantially unaffected; no additional approval of semitrailer 1 is required following installation of the conveyor belts; the normal loading bed can be dispensed with; and no alterations to the semitrailer are required to install the conveyor belts and conveyor belt control members.

Clearly, changes may be made to the semitrailer and the loading and unloading system as described herein without, however, departing from the scope of the accompanying Claims. For example, the system may be installed on any freight-carrying vehicle, such as a truck, van or trailer; the loading and unloading system may comprise a different number of conveyor belts 18; or conveyor belts 18 may be operated by more than one motor reducer 49.

The path of chains 26 may be altered by eliminating or differently arranging transmission pulleys 63 and 66; and changes may be made to the materials and section of slats 32 and strips 77 and 84, to the position of supporting bars 71 and 76, and to the type of motor reducer 49 and relative controls.

## Claims

1. A solid-freight semitrailer equipped with a fast freight loading and unloading system, and comprising a supporting frame (2) defined by longitudinal members (6, 7, 13) connected by cross members (15, 16), and at least one conveyor belt (18) moved longitudinally by pairs of pulleys (19, 21), so as to define a flat portion of the path of said conveyor belt (18) for supporting freight during transportation; **characterized in that** said pulleys (19, 21) and said conveyor belt (18) are so arranged that said flat portion of the path is on a level with the normal loading surface (P) of the semitrailer.

2. A semitrailer as claimed in Claim 1, **characterized in that** said conveyor belt (18) comprises a supporting structure (23, 24) integrated with said frame (2); said supporting structure (23, 24) comprising a pair of further longitudinal members (23) connected by respective cross members (24); said pair of further longitudinal members (23) being fixed to two of the longitudinal members (6, 7, 13) of said frame (2); and said pairs of pulleys (19, 21) being carried by shafts (36, 54) fitted to said pair of further longitudinal members (23).

3. A semitrailer as claimed in Claim 2, **characterized in that** a first of said further longitudinal members (23) is fixed to one wing (12) of a bar (11) of one of said longitudinal members (6, 7) of the frame (2); a second of said further longitudinal members (23) being fixed either to one wing (12) of the bar (11) of said longitudinal members (7) or to a portion (22) of a horizontal plate (16) of said cross members (15, 16) of said frame (2).

4. A semitrailer as claimed in Claim 2 or 3, **characterized in that** said pulleys (19, 21) are toothed; and **in that** said conveyor belt (18) comprises a pair of chains (46) engaged by said toothed pulleys (19, 21) and each defined by articulated elements (27, 32).

5. A semitrailer as claimed in Claim 4, **characterized in that** each chain element (27, 32) is defined by a pair of plates (27) connected by pins (28); each of said pins (28) having an extension (31) projecting from one of said plates (27) towards the centerline of said conveyor belt (18) to engage a corresponding hole (34) in a freight-supporting slat (32).

6. A semitrailer as claimed in Claim 5, **characterized in that** each pin (28) of said chain element (27, 32) has a spacer roller (29) for spacing said plates (27); said toothed pulleys (19, 21) engaging said spacer roller (29).

7. A semitrailer as claimed in Claim 6, **characterized in that** each slat (32) has a pair of holes (34) engaged by a pair of said pins (28); two chain elements (27, 32) being connected by a further pair of plates (27); and said slat (32) having a nonslip surface (33).

8. A semitrailer as claimed in Claim 6 or 7, **characterized in that** said spacer rollers (29) engage a pair of supporting guides (71) carried by each further longitudinal member (23) in said pair of further longitudinal members (23).

9. A semitrailer as claimed in Claim 8, **characterized in that**, along said flat portion of the path, said slats (32) slide along at least one intermediate bar (73, 76) carried by connecting members (24, 74) of said further longitudinal members (23).

10. A semitrailer as claimed in one of Claims 4 to 9, **characterized in that** said pairs of toothed pulleys (19, 21) comprise a pair of rear pulleys (19) fitted to a corresponding rear shaft (36) rotating on said further longitudinal members (23); and a pair of front pulleys (21) carried by a corresponding front shaft (54) fitted to said further longitudinal members (23).

11. A semitrailer as claimed in Claim 10, **characterized in that** said front shaft (54) is fitted to each further longitudinal member (23) with the interposition of an adjusting support (57) adjustable individually to adjust the tension of the respective chain (46).

12. A semitrailer as claimed in Claim 11, **characterized in that** said chains (26) also engage further pairs of toothed transmission pulleys (63, 66) to reduce the size of said conveyor belt (18) along a corresponding portion of said path.

13. A semitrailer as claimed in one of Claims 10 to 12, **characterized in that** said loading and unloading system comprises a number of parallel conveyor belts (18) spaced by fixed strips (77) coplanar with said normal loading surface (P).

14. A semitrailer as claimed in Claims 10 and 13, **characterized in that** the rear shafts (36) of said conveyor belts (18) are coaxial; at least two of said rear shafts (36) being connected integrally with each other by a joint (39).

15. A semitrailer as claimed in Claim 14, **characterized in that** said joint (39) is toothed, and is housed in a casing (42) having lubricating grease sealing means (43).

16. A semitrailer as claimed in Claim 14, **characterized in that** said frame (2) comprises a pair of lateral longitudinal members (13), and an intermediate longitudinal member (6, 7) located between two adjacent conveyor belts (18); said casing (42) being housed in an opening in the corresponding intermediate longitudinal member (6, 7).

17. A semitrailer as claimed in Claim 16, **characterized in that** at least one of said rear shafts (36) is fitted with a toothed transmission pulley (44) of a motor reducer (49); a transmission chain (46) being provided between said toothed transmission pulley (44) and a toothed drive pulley (47) of said motor reducer (49).

18. A semitrailer as claimed in Claim 17, **characterized in that** said transmission chain (46) is engaged by a toothed elastic ring (53) mounted and preloaded between two portions of said transmission chain (46).

19. A semitrailer as claimed in Claim 16, **characterized in that** two adjacent said rear shafts (36) are fitted with two toothed transmission pulleys (44) of a motor reducer (49); two transmission chains (46) being provided between said toothed transmission pulleys (44) and a pair of toothed drive pulleys (47) integral with each other and carried by said motor reducer (49).

20. A semitrailer as claimed in Claim 19, **characterized in that** said transmission chains (46) are engaged by a double toothed elastic ring (53) mounted and preloaded between two portions of said transmission chains (46).

21. A semitrailer as claimed in one of Claims 13 to 20, **characterized in that** each of said intermediate longitudinal members (6, 7) has a bar (11) having two upward-extending wings (12); each of said strips (77) being defined by contoured panels (78) made of plastic material and fixed to said bar (11).

22. A semitrailer as claimed in Claim 21, **characterized in that** at least a portion of said bars (11) has transverse reinforcing ribs (75); said contoured panels (78) having recesses for housing said ribs (75).

23. A semitrailer as claimed in Claim 21 or 22, **characterized in that** said lateral longitudinal members (13) are fitted with two additional strips (84) made of plastic material and coplanar with said normal loading surface (P).
